# EUROPEAN PATENT APPLICATION

(11) **EP 2 908 471 A1**
(43) Date of publication of application: **19.08.2015**
(21) Application number: 14154920.4
(22) Date of filing: 12.02.2014
(51) Int. Cl.: H04L 12/26, G06F 17/30

(54) **Method for data graph navigation in a big traffic dataset of a network**

(71) Applicant: ALCATEL LUCENT, 92100 Boulogne-Billancourt (FR)
(72) Inventor: Saidi, Mohamed Adel, 91620 Nozay (FR); Natarianni, Lionel, 91620 Nozay (FR)
(74) Representative: Camus, Olivier Jean-Claude

(57) **Abstract**

The invention relates to a method for data graph navigation in a big traffic dataset of a network. The method comprises: establishing, from the big traffic dataset, a plurality of graphs representing communication traffic dataset over a defined range of time, said establishing of a plurality of graphs being realized by an indexing component. A further step of incrementally establishing a limited number of sub-graphs from the plurality of graphs, said establishing of a limited number of sub-graphs being realized by the indexing component by finding frequent sub-graphs is part of the method. A further step of graphically querying the established list of sub-graphs via a GUI is part of the method.

## Description

### FIELD OF THE INVENTION

The present invention relates to a method for data graph navigation in a big traffic dataset to optimize a network, for instance a telecom network. More particularly, the big traffic dataset can be used across wireless technology like LTE or any other communication service like online Visio-conference over IMS (for IP Multimedia Subsystem). The invention relates also to a system for data graph navigation in a big traffic dataset.

### BACKGROUND AND RELATED ART

It is known several methods for data navigation in a big traffic dataset of a network allowing fast analysis of data. Such methods are proposed, by instance, by the followings companies: Cisco Systems, CDW-G, and Tellabs.

More particularly, the all above companies propose solutions for network optimization based on the basic functionality of the network management components. It could be noted that the solutions proposed by these companies do not support call trace data to detect traffic networking patterns. Furthermore, the solutions can't be deployed for the WWAN (Wireless Wide Area Network) configuration, where a very large data flow with fine-grained structured elements, like the PCMD (for Per Call Measurement Data), are used across LTE technology.

### THE INVENTION

An object of the invention is therefore to propose a method for data navigation in a big traffic dataset of a network allowing easy analyzing and exploring of data.

To this end, the invention relates to a method for data graph navigation in a big traffic dataset of a network, said method comprising the steps of:
- Establishing, from the big traffic dataset, a plurality of graphs representing communication traffic dataset between terminals and network elements over a defined range of time, the establishing of a plurality of graphs being realized by an indexing component,
- Establishing a plurality of sub-graphs from the plurality of graphs, the establishing of a plurality of sub-graphs being realized by the indexing component.

It could be noted that the data of the dataset are represented by several graphs representing, for instance, call logs interaction between terminals and network elements. Each graph is a snapshot of network activity over a defined range of time. Therefore, successive graphs represent successive ranges of time.

Besides, each graph is, by instance, an oriented graph with labeled (terminal ID, cell ID) nodes and time stamped links.

The method according to the invention allows establishing a plurality of sub-graphs from the plurality of graphs representing a communication traffic dataset, like call logs data (PCMD: Per Call Measurement Data) used across wireless technology like LTE or any other communication service like online Visio-conference.

More particularly, a sub-graph is topological, i.e. it includes structural information about the linking of some entities of the graph. Furthermore, a sub-Graph can embed other information, like attribute values of the nodes or of the edges. For the time-enabled graphs, the sub-graphs can also include time information, and can then represent situations that express evolution of situations over time.

In addition to the main features aforementioned in the previous paragraph, the method according to the invention may also have one or more of the additional features below, taken individually or in any technically feasible combination.

In a not limited embodiment, each graph is an oriented graph with labeled nodes and time-stamped links.

In a not limited embodiment, the sub-graphs of the limited number of sub-graphs are sub-graphs of length X, said limited number of sub-graphs of length X being established by:
- selecting all sequences of graphs composed of X nodes and linked, each sequence forming a sub-graph of length X,
- computing the number of occurrence of all sub-graphs of length X,
- merging all identical sub-graphs of length X into a single sub-graph of length X with a support representing the number of occurrences, such as to obtain a list of sub-graphs of length X with their occurrences,
- removing sub-graphs of length X whose said support is lower to a determined threshold such as to obtain a limited number of sub-graphs of length X.

In a not limited embodiment, the limited number of sub-graphs, comprises limited number of sub-graphs of length X and limited number of sub-graphs of length X+1.

In a not limited embodiment, the limited number of sub-graphs of length X+1 is established by :
- performing Cartesian products of the limited number of sub-graphs of length X such as to obtain sub-graphs of length X+1,
- comparing the sub-graphs of length X+1 to the plurality of graphs such as to determine the existing sub-graphs of length X+1,
- computing the number of occurrence of all existing sub-graphs of length X+1,
- For all existing sub-graphs of length X+1, merging all identical sub-graphs of length X+1 into a single sub-graph of length X+1 with a support representing the number of occurrence, such as to obtain a list of sub-graphs of length X+1 with their occurrences,
- removing sub-graphs of length X+1 whose said support is lower to a determined threshold such as to obtain a limited number of sub-graphs of length X+1.

In a not limited embodiment, the step of performing Cartesian products to the step of removing sub-graphs of length X+1 are repeated with a superior value of X.

In a not limited embodiment, the determined threshold is equal to 2.

In a not limited embodiment, the method further comprises:
- Creating, via a user interface of a user terminal, a graph query in order to gather determined information into the big dataset,
- sending said graph query to a completion engine,
- gathering, via said completion engine, at least one sub-graph to which said graph query corresponds,
- displaying said at least one sub-graph gathered on said user terminal.

In a not limited embodiment, the creation of a graph query is realized by placing vertices and edges on the user interface.

The invention relates also to a system for data graph navigation in a big traffic dataset of a network, the system comprising:
- a storage database arranged and construed to register traffic dataset from the network,
- an indexing component adapted and construed to:
   o establish, from the big dataset, a plurality of graphs representing communication traffic dataset over a defined range of time,
   o establish a plurality of sub-graphs from the plurality of graphs, said sub-graphs being established according to the method according to the invention,
- a user terminal comprising a visual interface arranged and construed to create a graph query,
- a completion engine adapted and construed to gather at least one sub-graph to which said graph query corresponds, said user terminal being arranged and construed to display said at least one sub-graph gathered.

### BRIEF DESCRIPTION OF THE DRAWINGS

Further features and advantages of the invention will become clear upon reading the following description given by way of non-limiting indication and with reference to the accompanying drawings, in which:
- Figure 1 illustrates, in a none-limitative embodiment, a system for data graph navigation in a big traffic dataset of a network according to the invention,
- Figure 2 illustrates, in a none-limitative embodiment, a method for data graph navigation in a big traffic dataset of a network according to the invention, and
- Figure 3 illustrates, in a none-limitative embodiment, a plurality of graphs representing communication traffic dataset between terminals and network elements over a defined range of time.

For reasons of clarity, only those elements beneficial for comprehension of the invention have been shown, more specifically schematically and with no regard for scale. Furthermore, like elements illustrated in different figures are denoted by like reference numerals.

### DETAILLED DESCRIPTION

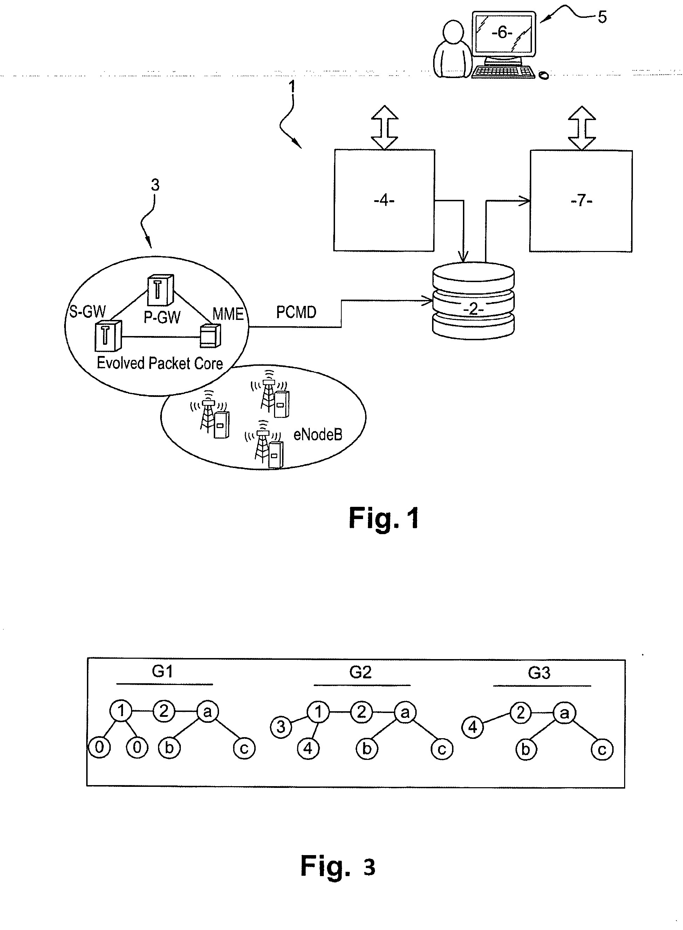

The figure 1 illustrates, in a none-limitative embodiment, a system 1 for data graph navigation in a big traffic dataset of a network 3 according to the invention.

In this not limited embodiment, the system 1 comprises a storage database 2 arranged and construed to register big traffic dataset from a network 3, for example a LTE network (for Long Term Evolution network). According to the LTE technology, the network 3 comprises eNodeB adapted and construed to communicate with entities of an Evolved Packet Core comprising S-GW (for Serving Gateway), MME (for Mobility Management Entity), and PGW (for PDN Gateway) entities.

In this example, the traffic dataset can be formed by data like call logs data (PCMD: Per Call Measurement Data) used across wireless technology like LTE. In a general manner traffic dataset can be formed by a time-series of measurement data, Timestamp, IMSI (International Mobile Subscriber Identity), UE Type, Cell_ID, Localization.

Furthermore, the system 1 comprises an indexing component 4 adapted and construed to:
- establish, from the big traffic dataset, a plurality of graphs representing communication traffic dataset over a defined range of time,
- establish a limited number of sub-graphs from the plurality of graphs, said sub-graphs being established according to the method of the invention.

Futhermore, the system 1 comprises a user terminal 5 comprising a visual interface 6 arranged and construed to create a graph query.

The system 1 comprises also a completion engine 7 adapted and construed to gather at least one sub-graph to which the graph query corresponds. The user terminal 5 is further arranged and construed to display the at least one sub-graph gathered on the visual interface 6.

This system 1 is arranged and construed to perform the method for data graph navigation in a big traffic dataset of a network according to the invention.

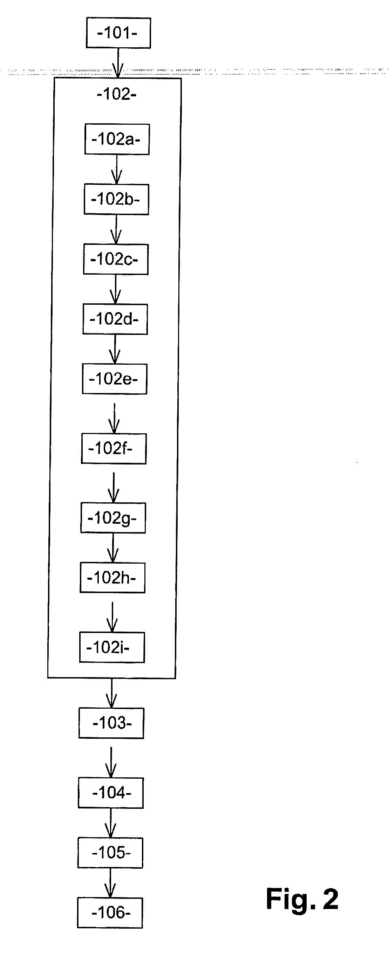

The figure 2 illustrates, in a none-limitative embodiment, a method 100 for data graph navigation in a big traffic dataset of a network according to the invention.

The method 100 comprises a step 101 of establishing, from the big traffic dataset, a plurality of graphs representing, by instance, call logs interaction between terminals and network elements over a defined range of time. As previously indicated, the graphs are established by the indexing component 3.

Three graphs G1, G2, G3 are illustrated in figure 3. Each graph G1, G2, G3 is an oriented graph with labeled nodes 1, 2, a, 0, b, c (for example, terminal ID and cell ID) and time-stamped links L.

Each graph G1, G2, G3 is a snapshot of the network activity over a defined range of time. Therefore, these successive graphs G1, G2 and G3 represent successive ranges of time.

Besides, the method comprises a step 102 of establishing a limited number of sub-graphs from the plurality of graphs G1, G2 and G3.

As previously indicated, the sub-graphs are established by the indexing component 4. Moreover, it could be noted that the established sub-graphs are stored in the data storage 2.

In a not limited embodiment the establishing 102 of a limited number of sub-graphs consists to establish sub-graphs presenting a same length X, wherein X is equal to 2.

For establish the limited number of sub-graphs of length 2, the method 100 performs a step 102a of selecting all sequences of graphs G1, G2 and G3 composed of 2 nodes and linked, each sequence forming a sub-graph of length 2.

This step 102a allows obtaining a list of sub-graphs of length 2 and this list is stored inside the data storage 2.

In this example, the list of sub-graphs of length 2 is composed for:
- the graph G1 of the following sub-graphs: (0,1) (0,1) (2,1) (2,a) (a,b) (a,c),
- the graph G2 of the following sub-graphs: (1,3) (1,4) (1,2) (2,a) (a,b) (a,c), and
- the graph G3 of the following sub-graphs: (2,4) (2,a) (a,b) (a,c).

For establish the limited number of sub-graphs of length X, the method 100 performs also a step 102b of computing the number of occurrence of all sub-graphs of length X (2, in this example).

According to the example, there are:
- two sub-graphs of the type (1,0),
- two sub-graphs of the type (2,1),
- one sub-graph of the type (1,3),
- one sub-graph of the type (1,4),
- three sub-graphs of the type (2,a),
- one sub-graph of the type (2,4),
- three sub-graphs of the type (a,b), and
- three sub-graphs of the type (a,c).

Then, the method 100 performs a further step 102c of merging all identical sub-graphs of length 2 into a single sub-graph of length 2 with a support representing the number of occurrence, such as to obtain a list of sub-graphs of length 2 with their occurrences.

In this example, the list of sub-graphs of length 2 with their occurrences is composed of:
- Graph1.2-sub1: (1,0)x2 (2 being the occurrence of the sub-graph (1,0)),
- Graph1.2-sub3: (2,1)x2 (2 being the occurrence of the sub-graph (2,1)),
- Graph2.2-sub1: (1,3)x1 (1 being the occurrence of the sub-graph (1,3)),
- Graph2.2-sub2: (1,4)x1 (1 being the occurrence of the sub-graph (1,4)),
- Graph2.2-sub4: (2,a)x3, (3 being the occurrence of the sub-graph (2,a)),
- Graph3.2-sub1: (2,4)x1, (1 being the occurrence of the sub-graph (2,4)),
- Graph3.2-sub3: (a,b)x3 (3 being the occurrence of the sub-graph (a,b)), and
- Graph1.2-sub6: (a,c)x3 (3 being the occurrence of the sub-graph (a,c)).

It could be noted that a label is associate to each sub-graph. The label is composed, for instance, of GraphX.Y-subZ, with:
- X : Number of the graph by which starts the exploration,
- Y : length of the sub-graph, and
- Z : Number of the sub-graph of the graph by which starts the exploration.

These labels are then used to explore the graphs.

For establish the limited number of sub-graphs of length 2, the method comprises also a step 102d of removing sub-graphs of length 2 whose the support is lower to a determined threshold such as to obtain a limited number of sub-graphs of length 2.

The threshold indicates if the sub-graph is frequent or not. In a not limited example, the threshold is equal to 2. Therefore, according to the step of removing 102d, all sub-graphs that are present only one time are removed.

In the example, the limited number of sub-graphs of length 2 is formed by the following sub-graphs:
- Graph1.2-sub1: (1,0)x2,
- Graph1.2-sub3: (2,1)x2,
- Graph2.2-sub4: (2,a)x3,
- Graph3.2-sub3: (a,b)x3, and
- Graph1.2-sub6: (a,c)x3.

In a not limited embodiment the establishing 102 of a limited number of sub-graphs consists to establish a limited number of sub-graphs of length X and a limited number of sub-graphs of length X+1. These sub-graphs established are also stored in the data storage 2.

For establish the limited number of sub-graphs of length X+1 (i.e. sub-graphs of length 3), the method 100 comprises a step of performing 102e Cartesian products of the limited number of sub-graphs of length X defined by the step 102d of removing sub-graphs of length 2. By instance, the sub-graph of length 2 (1,0) is combined with the sub-graph of length 2 (2,1). Therefore, this combination permits to obtain the following sub-graph of length 3: (1,0)(2,1).

In another not limited example, the sub-graph of length 2 (2,1) is combined with the sub-graph of length 2 (2,a). Therefore, this combination permits to obtain the following sub-graph of length 3: (1,2)(2,a).

In a further not limited example, the sub-graph of length 2 (2,a) is combined with the sub-graph of length 2 (a,b). Therefore, this combination permits to obtain the following sub-graph of length 3: (2,a)(a,b).

All possible combinations are made such as to obtain a list of sub-graph of length 3.

Then, as some sub-graphs of length 3 does not exist in the graphs G1, G2 and G3, the method 100 performs a step 102f of comparing the sub-graphs of length 3 to the plurality of graphs G1, G2 and G3 such as to determine the existing sub-graphs of length 3.

The method 100 performs a further step of computing 102g the number of occurrence of all existing sub-graphs of length 3.

Then, for all existing sub-graphs of length 3, the method 100 performs a step of merging 102h all identical sub-graphs of length 3 into a single sub-graph of length 3 with a support representing the number of occurrence, such as to obtain a list of sub-graphs of length 3 with their occurrences.

The method 100 performs also a step of removing 102i sub-graphs of length 3 whose the support is lower to a determined threshold such as to obtain a limited number of sub-graphs of length 3. The threshold indicates if the sub-graph is frequent or not.

In a not limited example, the threshold is 2 and the limited number of sub-graphs of length 3 is formed by the following sub-graphs:
- graph1.2-sub4+1: (2,a)(a,b) x3,
- graph1.2-sub4+1: (2,a)(a,c) x3,
- graph1.2-sub5+1: (a,b)(a,c)x3,

In a not limited embodiment of the method 100, the step of performing 102e Cartesian products to the step of removing 102i sub-graphs of length X+1 are repeated with a superior value of X. Therefore, the establishing 102 of a limited number of sub-graphs consists to establish a limited number of sub-graphs of length X, a limited number of sub-graphs of length X+1 (with X=1), and a limited number of sub-graphs of length X+1 (with X=2). These sub-graphs established are also stored in the data storage 2.

More particularly, for establish the limited number of sub-graphs of length X+1 where X=2, the method performs the further following steps of:
- performing 102e Cartesian products of the limited number of sub-graphs of length 3 such as to obtain sub-graphs of length 4,
- comparing 102f the sub-graphs of length 4 to the plurality of graphs G1, G2, G3 such as to determine the existing sub-graphs of length 4,
- computing 102g the number of occurrence of all existing sub-graphs of length 4,
- For all existing sub-graphs of length 4, merging 102h all identical sub-graphs of length 4 into a single sub-graph of length 4 with a support representing the number of occurrence, such as to obtain a list of sub-graphs of length 4 with their occurrences,
- removing 102i sub-graphs of length 4 whose said support is lower to a determined threshold such as to obtain a limited number of sub-graphs of length 4.

Thus, given the limited number of sub-graphs of length 3, the method 100 generates a limited number of sub-graphs of length 4. The steps of performing 102e Cartesian products to the step of removing 102i sub-graphs of length X+1 could be repeated with a superior value of X until it is not possible to generate more sub-graphs.

In the example illustrated, the limited number of sub-graphs of length 4 is composed of the following sub-graphs:
- Graph1.2+1+1-sub3: (2,1)(2,a)(a,b) x2, and
- Graph1.2+1+1 -sub4: (2,a)(a,b)(a,c) x3.

Therefore, according to the example, the establishing 102 of a limited number of sub-graphs allows obtaining:
- the limited number of the following sub-graphs of length 2:
   o Graph1.2-sub1: (1,0)x2,
   o Graph1.2-sub3: (2,1)x2,
   o Graph2.2-sub4: (2,a)x3,
   o Graph3.2-sub3: (a,b)x3, and
   o Graph1.2-sub6: (a,c)x3.
- the limited number of the following sub-graphs of length 3:
   o graph1.2+1-sub4: (2,a)(a,b) x3,
   o graph1.2+1-sub4: (2,a)(a,c) x3, and
   o graph1.2+ 1-sub5: (a,b)(a,c)x3.
- the limited number of the following sub-graphs of length 4:
   o Graph1.2+1+1-sub3: (2,1)(2,a)(a,b) x2, and
   o Graph1.2+1+1 -sub4: (2,a)(a,b)(a,c) x3.

The method 10 further performs a step of creating 103, via the user interface 6 of the user terminal 5, a graph query in order to gather determined information into the big dataset. The graph query is, by instance, draw by a user which place vertices and edges on the user interface 6 of the user terminal 5.

The method 100 performs also a step of sending 104 said graph query to the completion engine 7.

Then the method 100 performs a step of gathering 105, via the completion engine 7, at least one sub-graph of the limited number of sub-graphs to which the graph query corresponds. For that purpose, the completion engine 7 gather the at least one sub-graph inside the storage database 2. More particularly, the completion engine seeks sub-graphs matching at least partially with the graph query. In other words, the completion engine gathers patterns to which the query can expand, means seeks patterns that are equal or greater than the one which was asked.

Then, the method 100 comprises a step of displaying 106 the at least one sub-graph gathered, the displaying being realized by the user terminal 5.

In other terms, an analyst or a platform operator creates a graph query in order to gather information about the network traffic dataset. The method according to the invention proposes a graphic interface to simplify the operator task.

To resume, the method and the system according to the invention allow:
- simplifying the discovery of the communication networking, by proposing sub-graphs,
- a fast analysis of data in a visual way, by allowing the analyst to be instantly aware of outstanding network optimization sub-graphs that are present in the network graph,
- managing telecommunication traffic congestions in real-time, by using call logs data (PCMD) feedbacks and extracting information from a complex dataset.

## Claims

1. Method (100) for data graph navigation in a big traffic dataset of a network (3), said method (100) :
- establishing (101), from the big traffic dataset, a plurality of graphs (G1, G2, G3) representing communication traffic dataset over a defined range of time, said establishing (101) of a plurality of graphs (G1, G2, G3) being realized by an indexing component (4),
- establishing (102) a limited number of sub-graphs from the plurality of graphs (G1, G2, G3), said establishing (102) of a limited number of sub-graphs being realized by the indexing component (4).

2. Method (100) for data graph navigation according to claim 1, wherein each graph (G1, G2, G3) is an oriented graph with labeled nodes and time-stamped links.

3. Method (100) for data graph navigation according to one of the preceding claims, wherein the sub-graphs of the limited number of sub-graphs are sub-graphs of length X, said limited number of sub-graphs of length X being established by:
- selecting (102a) all sequences of graphs (G1, G2, G3) composed of X nodes and linked, each sequence forming a sub-graph of length X,
- computing (102b) the number of occurrence of all sub-graphs of length X,
- merging (102c) all identical sub-graphs of length X into a single sub-graph of length X with a support representing the number of occurrences, such as to obtain a list of sub-graphs of length X with their occurrences,
- removing (102d) sub-graphs of length X whose said support is lower to a determined threshold such as to obtain a limited number of sub-graphs of length X.

4. Method (100) for data graph navigation according to claim 3, wherein said limited number of sub-graphs, comprises limited number of sub-graphs of length X and limited number of sub-graphs of length X+1.

5. Method (100) for data graph navigation according to claim 4, wherein the limited number of sub-graphs of length X+1 is established by :
- performing (102e) Cartesian products of the limited number of sub-graphs of length X such as to obtain sub-graphs of length X+1,
- comparing (102f) the sub-graphs of length X+1 to the plurality of graphs (G1, G2, G3) such as to determine the existing sub-graphs of length X+1,
- computing (102g) the number of occurrence of all existing sub-graphs of length X+1,
- For all existing sub-graphs of length X+1, merging (102h) all identical sub-graphs of length X+1 into a single sub-graph of length X+1 with a support representing the number of occurrence, such as to obtain a list of sub-graphs of length X+1 with their occurrences,
- removing (102i) sub-graphs of length X+1 whose said support is lower to a determined threshold such as to obtain a limited number of sub-graphs of length X+1.

6. Method (100) for data graph navigation according to claim 5, wherein the step of performing Cartesian products (102e) to the step of removing sub-graphs of length X+1 (102i) are repeated with a superior value of X.

7. Method (100) for data graph navigation according to one of the claims 3 to 6, wherein the determined threshold is equal to 2.

8. Method (100) for data graph navigation according to any one of the preceding claims, wherein said method (100) further comprises:
- Creating (103), via a user interface (6) of a user terminal (5), a graph query in order to gather determined information into the big dataset,
- sending (104) said graph query to a completion engine (7),
- gathering (105), via said completion engine (7), at least one sub-graph to which said graph query corresponds,
- displaying (106) said at least one sub-graph gathered on said user terminal (5).

9. Method (100) for data graph navigation according to claim 8 wherein the creation of a graph query is realized by placing vertices and edges on the user interface (6).

10. System (1) for data graph navigation in a big traffic dataset of a network (3), said system (1) comprising:
- a storage database (2) arranged and construed to register traffic dataset from the network (3),
- an indexing component (4) adapted and construed to:
o establish, from the big dataset, a plurality of graphs (G1, G2, G3) representing communication traffic dataset over a defined range of time,
o establish a plurality of sub-graphs from the plurality of graphs (G1, G2, G3), said sub-graphs being established according to the method according to any one of the claims 3 to 9,
- a user terminal (5) comprising a visual interface (6) arranged and construed to create a graph query,
- a completion engine (7) adapted and construed to gather at least one sub-graph to which said graph query corresponds, said user terminal (5) being arranged and construed to display said at least one sub-graph gathered.
